# EUROPÄISCHE PATENTANMELDUNG

(11) **EP 1 936 152 A2**
(43) Veröffentlichungstag der Anmeldung: **25.06.2008**
(21) Anmeldenummer: 07119725.5
(22) Anmeldetag: 31.10.2007
(51) Int. Cl.: F02D 11/10

(54) **Verstelleinrichtung mit zwei Stellelementen und gemeinsamen Stellantrieb**

(30) Priorität: 30.01.2007 DE 102007004564; 21.12.2006 DE 102006060630
(71) Anmelder: ROBERT BOSCH GMBH, 70442 Stuttgart (DE)
(72) Erfinder: Grossmann, Alex, 71229, Leonberg (DE); Hallor, Mattias, 71706, Markgroeningen (DE)

(57) **Zusammenfassung**

Die Erfindung betrifft eine Verstelleinrichtung (10) mit zwei Stellelementen (11, 12) und einem gemeinsamen Stellantrieb (13) sowie mit einer Überwachung der Funlctionalität und mit einer Fehlermeldung und Diagnose von Defekten der Verstelleinrichtung.

Für eine möglichst einfache und zuverlässige Überwachung unter Einsparung von Positionssensoren an den Stellelementen wird vorgeschlagen, den Verstellbereich der beiden Stellelemente (11, 12) durch Anschläge (A1, A2) zu begrenzen, den Verstellbereich der Stellelemente (11, 12) innerhalb eines größeren Verstellbereichs des Stellantriebs (13) zu legen, den Verstellbereich der Stellelemente und den des Stellantriebes (13) von einem gemeinsamen am Stellantrieb (13) angeordneten Positionssensor (20) zu überwachen und mit dem Positionssensor (20) ein Fehlersignal auszulösen, wenn die Position des Stellantriebes (13) über den Verstellbereich (Vst) der Stellelemente (11, 12) hinausgeht.

## Beschreibung

### Stand der Technik

Die Erfindung betrifft eine Verstelleinrichtung mit zwei Stellelementen und einen gemeinsamen Stellantrieb sowie mit einer Funktionsüberwachung nach der Gattung des Anspruchs 1.

Bei so genannten Ladungsbewegungsklappen in Saugrohren für größere mehrzylindrige Motoren, zum Beispiel für V-Motoren muss aufgrund gesetzlicher Vorschriften die Funktion der beiden als Stellelemente ausgebildeten, gleichzeitig zu betätigenden Bewegungsklappen sowie die Funktion des gemeinsamen Antriebs überwacht werden und beim Auftreten von Fehlfunktionen muss mittels einer Fehlerdiagnose der aufgetretene Fehler dem jeweiligen Stellelement oder dem gemeinsamen Antrieb zuzuordnen sein.

Zu diesem Zweck wurden bisher die Position der beiden Stellelemente über je einen Sensor direkt an den Stellelementen ausgelesen und die Position des Stellantriebes mit einem weiteren Sensor erfasst. Damit kann sowohl ein Bruch im Antriebsgestänge der beiden Stellelemente sowie ein Bruch am gemeinsamen Antrieb diagnostiziert werden. Derartige Lösungen mit drei Sensoren zur Funktionsüberwachung sind jedoch sehr aufwendig und außerdem störanfällig.

### Offenbarung der Erfindung

Mit der vorliegenden Lösung wird angestrebt, die Funktion einer Verstelleinrichtung mit zwei Stellelementen und einem gemeinsamen Stellantrieb bei deutlich verringertem Aufwand zu realisieren.

Bei einer derartigen Verstelleinrichtung mit den kennzeichnenden Merkmalen des Anspruchs 1 lässt sich nunmehr mit nur einem Positionssensor die gleiche Diagnosesicherheit bei deutlich weniger Aufwand erreichen. Anstelle der Sensoren an den beiden Stellelementen treten nunmehr lediglich zwei Anschläge, die den Verstellbereich der beiden Stellelemente begrenzen. Das hat den weiteren Vorteil einer deutlich verringerten Störanfälligkeit durch das Weglassen zweier Sensoren. Anstatt direkt die Position der beiden Stellelemente auszuwerten, wird über den Positionssensor des Stellantriebes nur überprüft, ob sich die Position des Stellantriebs im plausiblen Verstellbereich zwischen den beiden Anschlägen der Stellelemente befindet.

Durch die in den Unteransprüchen aufgeführten Maßnahmen ergeben sich vorteilhafte Ausgestaltungen und Weiterbildungen der im Hauptanspruch angegebenen Merkmale.

So lässt sich die Zuordnung eines Fehlers an einem der beiden Antriebsgestänge der zwei Stellelemente in einfacher Weise dadurch erreichen, dass der Verstellweg der beiden Stellelemente durch je einen Anschlag, vorzugsweise mechanisch begrenzt ist, wobei der eine Anschlag am ersten Stellelement und der andere Anschlag am zweiten Stellelement angeordnet ist. Für den gemeinsamen Antrieb ist dabei ein größerer Verstellbereich erforderlich, der seinerseits in vorteilhafter Weise durch je einen Anschlag am Stellantrieb, vorzugsweise mechanisch, begrenzt ist. Dabei lässt sich durch eine Programmierung der elektrischen Steuerung erreichen, dass eine Fehlerdiagnose nur dann erfolgt, wenn das Sensorsignal am Positionssensor des gemeinsamen Stellantriebs eine durch die Anschläge der Stellelemente vorgegebenen Position des Verstellbereichs überschreitet.

In einfacher Weise sind die beiden Stellelemente über je ein Verbindungsgestänge mit dem gemeinsamen Stellantrieb mechanisch verbunden und werden in vorteilhafter Weise dadurch überwacht, dass beim Überschreiten einer durch die Anschläge der Stellelemente vorgegebenen Position das Sensorsignal eine Fehlermeldung für das Verbindungsgestänge des betroffenen Stellelementes auslöst. Bei einer speziellen Ausführungsform, bei der die beiden Verbindungsgestänge über ein Zentralgestänge mit dem Stellantrieb verbunden sind, ist eine erweiterte Fehlerdiagnose dadurch realisierbar, dass beim Überschreiten der beiden durch die Anschläge beider Stellelemente vorgegebenen Positionen das Sensorsignal eine Fehlermeldung für das Zentralgestänge auslöst. In konkreter Anwendung der Verstelleinrichtung sind die beiden Stellelemente jeweils als Ladungsbewegungsklappen in einem Saugrohr für V-Motoren ausgebildet.

### Kurze Beschreibung der Zeichnungen

Die Erfindung wird im Folgenden beispielhaft anhand der Figuren näher erläutert. Es zeigen:
- Figur: 1 die erfindungsgemäße Verstelleinrichtung mit den beiden Stellelementen am rechtsdrehenden Anschlag in schematischer Darstellung,
- Figur 2: die Verstelleinrichtung mit den beiden Stellelementen am linksdrehenden Anschlag,
- Figur 3: zeigt den am Positionssensor des gemeinsamen Stellantriebes auftretenden Gesamtbereich des Sensorsignals zur Funktionsüberwachung ,
- Figur 4: zeigt ein Flussdiagramm einer Fehlerdiagnose in Abhängigkeit vom Sensorsignal und
- Figur 5: eine alternative Ergänzung des Flussdiagramms nach Figur 4.

### Ausführungsform der Erfindung

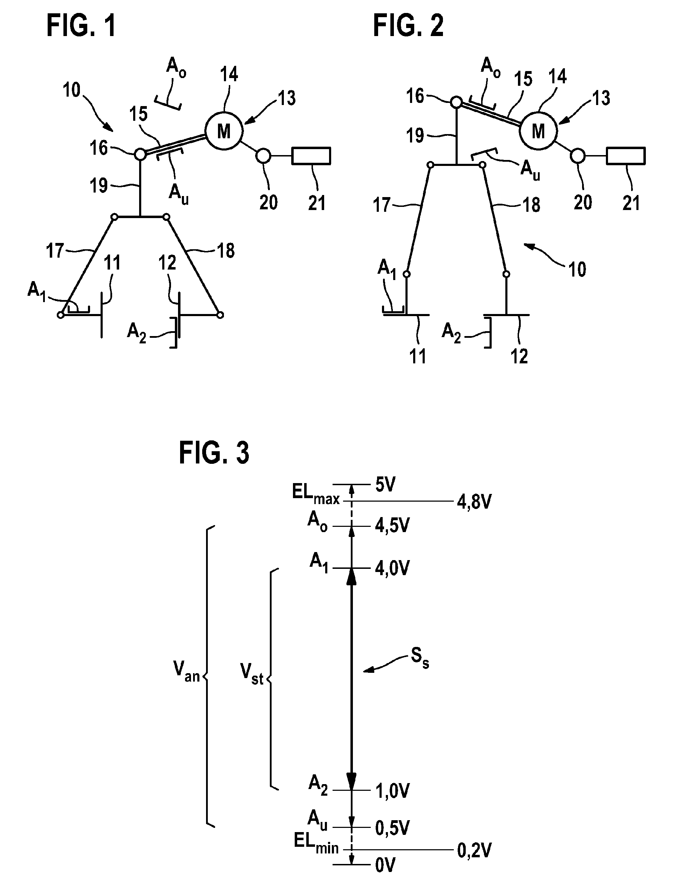

In den Figuren 1 und 2 ist eine erfindungsgemäße Verstelleinrichtung 10 schematisch dargestellt, wie sie beispielsweise für eine Saugrohrumschaltung bei so genannten V-Motoren benötigt wird. Die Verstelleinrichtung 10 umfasst zwei Stellelemente 11 und 12, die bei einer Saugrohrumschaltung als Ladungsbewegungsklappe in je einem Saugrohr des V-Motors ausgebildet sind. Die beiden Verstellelemente 11 und 12 werden mit einem gemeinsamen Stellantrieb 13 jeweils gleichzeitig um 90° in eine erste oder eine zweite Endlage gedreht. Der Stellantrieb 13 besteht aus einem Elektromotor 14 mit einem Getriebe 15 mit einem axial verschiebbaren oder verschenkbaren Abtriebsteil 16. Die beiden Stellelemente 11 und 12 sind jeweils über ein Gestänge 17 und 18 mit einem gemeinsamen Zentralgestänge 19 verbunden, welches wiederum am Abtriebsteil 16 des Stellantriebs 13 axial verstellbar befestigt ist. Der Verstellbereich der beiden Stellelemente 11 und 12 ist durch jeweils einen Anschlag begrenzt. Am linken Stellelement 11 ist ein Anschlag A1 für die waagrechte Endlage der Stellelemente 11 und 12 und am rechten Stellelement 12 ist ein Anschlag A2 für die senkrechte Endlage beider Stellelemente 11 und 12 angeordnet. Der Verstellbereich des Stellantriebes 13 ist ebenfalls begrenzt, und zwar durch einen oberen Anschlag Ao und einen unteren Anschlag Au am Getriebe 15. Die Position des gemeinsamen Stellantriebs 13 wird von einem am Elektromotor 14 angeordneten Positionssensor 20 überwacht, dessen Signalausgang mit einer programmierten elektronischen Schaltung 21 zur Überwachung und Fehlerdiagnose der Verstelleinrichtung verbunden ist.

Figur 1 zeigt die Verstelleinrichtung 10, in der die beiden Stellelemente 11 und 12 vom gemeinsamen Stellantrieb 13 über das Zentralgestänge 19 und die Gestänge 17 und 18 in ihre senkrechte Position verschwenkt sind. In dieser Position liegt das rechte Stellelement 12 an seinem mechanischen Anschlag A2 an. Aus dieser Position heraus können die beiden Stellelemente 11 und 12 vom Stellantrieb 13 um jeweils 90° in die waagrechte Endposition verschwenkt werden. Dies ist in Figur 2 dargestellt. In dieser Position liegt nunmehr das linke Stellelement 11 an seinem mechanischen Anschlag A1 an.

Figur 3 zeigt den Gesamtbereich des am Positionssensor 20 der Verstelleinrichtung 10 möglichen Sensorsignals Ss. Bei einer Steuerspannung von 5V kann dieses Sensorsignal zwischen 0V und 5V liegen. Das Sensorsignal Ss ist den Anschlägen der Verstelleinrichtung 10 so zugeordnet, dass beim Erreichen des unteren Anschlags Au im Stellantrieb 13 das Sensorsignal 0,5V, beim Erreichen des rechten Anschlages A2 am Stellelement 12 das Sensorsignal 1,0V, beim Erreichen des linken Anschlages A1 des linken Stellelementes 11 das Sensorsignal 4,0V und beim Erreichen des oberen Anschlages Ao im Stellantrieb 13 das Sensorsignal 4,5V beträgt. Diese Zuordnung der Anschläge bedeutet, dass der Verstellbereich Vst der beiden Stellelemente 11 und 12 innerhalb eines größeren Verstellbereichs Van des gemeinsamen Antriebs 13 liegt. Sobald das Sensorsignal Ss einen Wert annimmt, der außerhalb des Verstellbereichs Vst der Stellelemente 11 und 12 liegt, liegt folglich an der Verstelleinrichtung 10 ein Fehler vor. Diese Sensorsignale Ss werden in der Überwachungsschaltung 21 als Fehlersignale erkannt und einer näheren Fehlerdiagnose unterzogen. Da auch die Anschläge Ao und Au im Stellantrieb 13 als mechanische Anschläge ausgebildet sind, können diese in keinem Fall überfahren werden. Nimmt das Sensorsignal Ss jedoch Werte an, die außerhalb des Verstellbereichs Van des Antriebs 13 liegen, so muss ein elektrischer Fehler oder ein Bruch zwischen Elektromotor und Getriebe vorliegen.

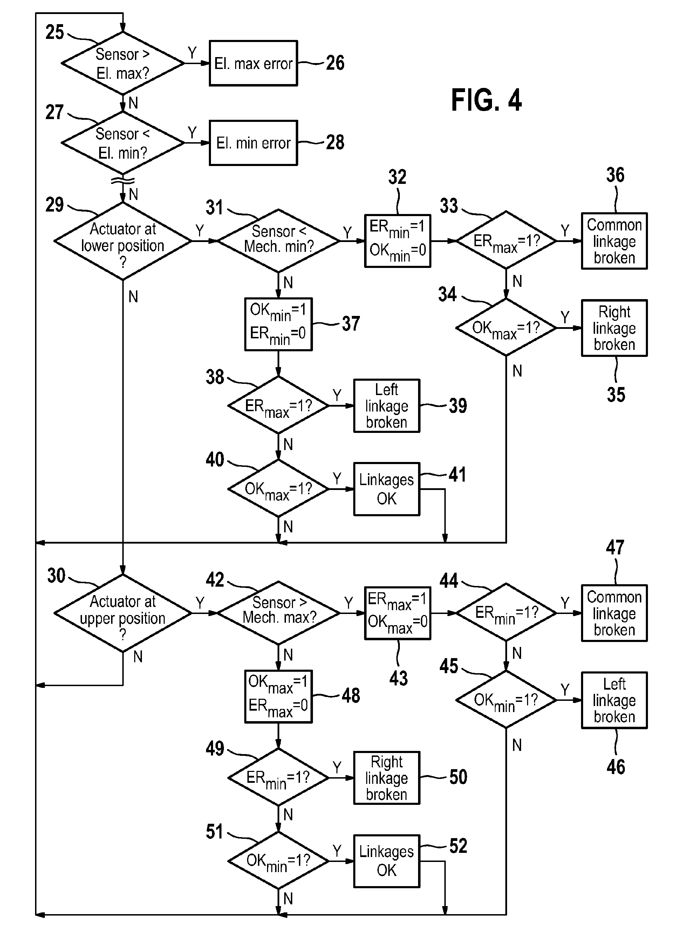

Figur 4 zeigt das zur Fehlerdiagnose verwendete Flussdiagramm in der Überwachungsschaltung 21. Das Sensorsignal Ss wird mit der Schaltung 21 zyklisch überwacht, indem das Flussdiagramm in der programmierten Schaltung 21 jeweils schrittweise durchlaufen wird. Im Schritt 25 wird zunächst geprüft, ob das Sensorsignal Ss einen Wert oberhalb einer Diagnoseschwelle El max von 4,8V angenommen hat. Ist dies der Fall, so wird im Schritt 26 ein elektrischer Fehler diagnostiziert und angezeigt, der beispielsweise ein Kabelabriss sein kann. Liegt das Sensorsignal Ss nicht oberhalb dieser Diagnoseschwelle, wird im Schritt 27 geprüft, ob es unterhalb einer unteren Diagnoseschwelle El min von 0,2V liegt. Ist dies der Fall, so liegt ebenfalls ein elektrischer Fehler vor, der im Schritt 28 zum Beispiel als Kurzschluss diagnostiziert und angezeigt wird. Liegt das Sensorsignal Ss oberhalb dieser Diagnoseschwelle, wird im Schritt 29 geprüft, ob der Stellantrieb 13 zur Ansteuerung der in Figur 1 dargestellten senkrechten Position der Stellelemente 11 und 12 für eine vorgegebene Zeit von beispielsweise 10 Sekunden nach unten verstellt wurde. Ist dies nicht der Fall, wird im Schritt 30 geprüft, ob der Stellantrieb 13 für eine vorgegebene Zeit nach oben verstellt wurde, um die in Figur 2 dargestellte Position zu erreichen, in der die beiden Stellelemente 11 und 12 in die waagerechte Lage verschwenkt wurden. Ist auch dies nicht der Fall, hat keinerlei Verstellung stattgefunden und das Programm der Schaltung 21 springt nun wieder auf den Schritt 25 zurück.

Wird im Schritt 29 festgestellt, dass an der Verstelleinrichtung 10 eine Verstellung nach unten erfolgt ist, wird im Schritt 31 geprüft, ob das Sensorsignal Ss nunmehr den durch den Anschlag A2 am Verstellelement 12 mechanisch vorgegebenen zulässigen Minimalwert unterschritten hat. Zur genauen Fehlerdiagnose ist die Überwachungsschaltung 21 mit vier Flags versehen, wobei im Ausgangszustand ein Flag ERmin für einen Fehler (Error) am Minimalwert des Verstellbereich Vst auf 0, und ein weiteres Flag OKmin für einen -in Ordnung- Zustand am Minimalwert zunächst auch auf 0 gesetzt ist. Das dritte Flag ERmax für einen Fehler am Maximalwert des Verstellbereichs Vst und das vierte Flag OKmax für einen -in Ordnung-Zustand am Maximalwert ist ebenfalls zunächst auf 0 gesetzt.

Unterschreitet nun das Sensorsignal Ss den Minimalwert des Verstellbereichs Vst von 1,0V, so wird im Schritt 32 das Flag ERmin auf 1 und das Flag OKmin auf 0 gesetzt. Im folgenden Schritt 33 wird nun überprüft, ob das Flag Ermax auf 1 steht. Ist dies nicht der Fall, wird im Schritt 34 überprüft, ob das Flag OKmax auf 1 steht. Sofern dies der Fall ist, liegt am Maximalwert des Verstellbereichs Vst kein Fehler vor. Aufgrund des im Schritt 32 gesetzten Fehlerflag ERmin kann damit nur an der Antriebsverbindung des rechten Gestänges 18 mit dem Stellelement 12 ein Defekt vorliegen und im Schritt 35 wird demzufolge ein Bruch des rechten Gestänges 18 angezeigt. Sollte jedoch bereits am Maximalwert des Verstellbereichs Vst ein Fehler aufgetreten sein und dementsprechend das Flag ERmax im Schritt 33 auf 1 stehen, wird damit ein Fehler am Zentralgestänge 19 diagnostiziert und im Schritt 36 wird dementsprechend ein Bruch des Zentralgestänges 19 angezeigt.

Wird dagegen im Schritt 31 festgestellt, dass das Sensorsignal Ss den Minimalwert des Verstellbereichs Vst nicht unterschritten hat, so wird im Schritt 37 gegebenenfalls das Flag ERmin auf 0 und das Flag OKmin auf 1 gesetzt. Danach wird im Schritt 38 geprüft, ob das Flag Ermax auf 1 gesetzt ist. Sofern dies der Fall ist, liegt ein Defekt am linken Gestänge 17 des Stellelements 11 vor und im Schritt 39 wird ein Bruch des linken Gestänges 17 angezeigt. Sollte dies nicht der Fall sein, wird im Schritt 40 geprüft, ob das Flag OKmax auf 1 gesetzt ist. Sofern dies der Fall ist, liegt das Sensorsignal Ss innerhalb des Verstellbereichs Vst für die Stellelemente 11 und 12 und im Schritt 41 wird demzufolge angezeigt, dass alle Gestänge in Ordnung sind und somit die Verstelleinrichtung 10 fehlerfrei arbeitet.

Wird im Schritt 30 festgestellt, dass der Stellantrieb 13 für eine vorgegebene Zeit von beispielsweise 10 Sekunden zur oberen Endlage hin bewegt wurde, wiederholen sich die Schritte 31 bis 41 in entsprechender Weise für den Maximalwert des Sensorsignals Ss am oberen Anschlag A1 des Verstellbereichs Vst. Dementsprechend wird im Schritt 42 geprüft, ob das Sensorsignal den vom Anschlag A1 mechanisch vorgegebenen zulässigen Maximalwert überschritten hat. Ist dies der Fall, wird im Schritt 43 das Flag ERmax auf 1 und das Flag OKmax auf 0 gesetzt. Im Schritt 44 wird geprüft, ob zuvor das Flag ERmin auf 1 gesetzt ist. Falls nicht, wird im Schritt 45 geprüft, ob zuvor das Flag OKmin auf 1 gesetzt wurde. Ist dies der Fall, so arbeitet das rechte Gestänge 18 mit Anschlag A2 des (Vers) Stellelementes 12 korrekt und es muss am linken Gestänge 17 für das Stellelement 11 mit dem Anschlag A1 eine Unterbrechung zum Stellantrieb 13 vorliegen. Demzufolge wird im Schritt 46 der Bruch des linken Gestänges 17 angezeigt. Wird dagegen im Schritt 44 auch noch ein Unterschreiten des Minimalwertes für den Verstellbereich Vst festgestellt, so wird dies als Fehler zwischen beiden Gestängen 17, 18 und dem Stellantrieb 13 diagnostiziert und dem Schritt 47 ein Bruch am Zentralgestänge 19 angezeigt.

Wird dagegen im Schritt 42 der Maximalwert des Verstellbereichs Vst nicht überschritten, so wird im Schritt 48 das Flag ERmax auf 0 und das Flag OKmax auf 1 gesetzt. Danach wird im Schritt 49 geprüft, ob zuvor das Flag ERmin auf 1 gesetzt wurde. Gegebenenfalls wird dann ein Bruch des rechten Gestänges 18 im Schritt 50 angezeigt. Andernfalls wird im Schritt 51 geprüft, ob zuvor das Flag OKmin auf 1 gesetzt ist. Gegebenenfalls wird dann im Schritt 52 angezeigt, dass alle Gestänge in Ordnung sind.

Sollten dagegen die in den Schritten 34, 40, 45 und 51 überprüften Flags nicht auf 1 gesetzt sein, so wird der Zyklus der Funktionsüberwachung erneut durchlaufen.

Die Überwachung und Fehlerdiagnose der Verstelleinrichtung 10 lässt sich gegebenenfalls in einfacher Weise noch dadurch erweitern, dass auch ein Defekt am Stellantrieb 13, zum Beispiel eine Unterbrechung zwischen dem Elektromotor 14 und dem Abtriebsteil 16 des Getriebes 15 festgestellt und angezeigt werden kann. Die beiden Anschläge Au und Ao für den Verstellbereich Van des Stellantriebes 13 sind dem Verstellbereich Vst der Stellelemente 11 und 12 derart zugeordnet, dass bei einer Unterbrechung zwischen dem Stellantrieb 13 und den Stellelementen 11, 12 der jeweilig dem Stellelement 11 beziehungsweise 12 zugeordnete Anschlag Ao beziehungsweise Au des Stellantriebs 13 anzufahren ist. Außerdem sind bei einer Unterbrechung zwischen dem Stellantrieb 13 und den beiden Stellelementen 11 und 12 beide Anschläge Ao und Au des Stellantriebs 13 nacheinander anzufahren. Unterschreitet nun das Sensorsignal den vom unteren Getriebeanschlag Au vorgegebenen Anschlagswert von 0,5V, bedeutet dies ebenso einen Bruch im Antriebsstrang zwischen Elektromotor 14 und Abtriebsteil 16 des Getriebes 14 wie ein Überschreiten des vom oberen Getriebeanschlag Ao vorgegebenen Anschlagwertes von 4,5V. Erst bei Signalwerten von kleiner 0,2V oder größer 4,8V liegt ein elektrischer Defekt an der Verstelleinrichtung 10 vor. Dadurch lassen sich mögliche elektrische Fehler von den möglichen mechanischen Defekten unterscheiden.

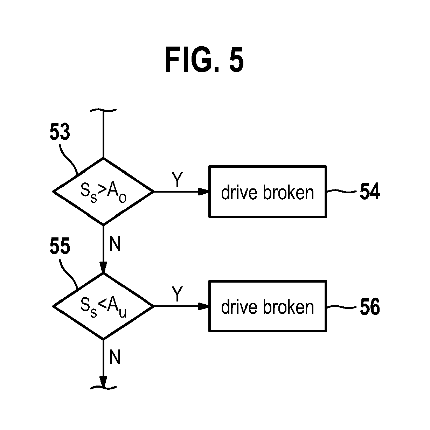

In Figur 5 ist eine entsprechende Ergänzung des Flussdiagramms aus Figur 4 dargestellt. Vor dem Programmschritt 29 wird nun im Schritt 53 geprüft, ob das Sensorsignal Ss über dem Anschlagswert von 4,5V des oberen Getriebeanschlags Ao liegt. Ist dies der Fall, wird im Schritt 54 ein Bruch im Stellantrieb 13 angezeigt. Andernfalls wird im Schritt 55 geprüft, ob das Sensorsignal Ss unterhalb des Anschlagwertes von 0,5V des unteren Getriebeanschlags Au liegt. Ist dies der Fall, wird im Schritt 56 ebenfalls ein Bruch im Stellantrieb 13 angezeigt. Andernfalls wird das Programm im Schritt 29 aus Figur 4 fortgesetzt.

Erfindungswesentlich ist die Überwachung der Verstelleinrichtung 10 mit nur einem Positionssensor 20 am Stellantrieb 13 und je einem Anschlag A1 und A2 an einem der beiden Stellelemente 11 und 12, um die gesamte Antriebsmechanik der Verstelleinrichtung 10 zu diagnostizieren. Bei einer Unterbrechung am Gestänge 17 können vom Stellantrieb 13 Positionen angefahren werden, die normalerweise unerreichbar sind, da zuvor der Anschlag A1 angefahren würde. Bei einer Unterbrechung am Gestänge 18 gilt dasselbe für den Anschlag A2. Und bei einer Unterbrechung am Zentralgestänge 19 können sowohl Positionen jenseits des Anschlags A1 als auch jenseits des Anschlags A2 angefahren werden. Damit ist eine konkrete Zuordnung von Defekten an der Verstelleinrichtung gewährleistet.

Im Rahmen der Erfindung können die beiden gleichzeitig zu betätigenden Stellelemente (11, 12) nicht nur als drehbare Klappen, sondern ebenso gut als Schieber oder dergleichen axial verstellbar ausgebildet sein. Ferner können anstelle der Gestänge 17, 18 und 19 auch andere Verbindungsmittel, wie zum Beispiel Zahnräder, Seilzüge oder dergleichen verwendet werden. Die Anwendung der Erfindung ist ferner überall dort möglich, wo zwei Stellelemente von einem gemeinsamen Antrieb gleichzeitig über einen vorgegebenen Verstellweg betätigt werden und deren Funktionalität dabei zu überwachen ist.

## Patentansprüche

1. Verstelleinrichtung (10) mit zwei Stellelementen (11, 12) und einem gemeinsam Stellantrieb (13) sowie mit einer Überwachung der Funktionalität der Stellelemente und des Stellantriebes innerhalb vorgegebener Verstellbereiche (Vst) und mit einer Fehlermeldung und Diagnose von Defekten, **dadurch gekennzeichnet,**
**dass** der Verstellbereich (Vst) der beiden gleichzeitig betätigbaren Stellelemente (11, 12) durch Anschläge (A1, A2) begrenzt ist,
**dass** der Verstellbereich (Vst) der beiden Stellelemente (11, 12) innerhalb eines größeren Verstellbereichs (Van) des gemeinsamen Stellantriebs (13) liegt,
**dass** beide Verstellbereiche (Vst,Van) von einem gemeinsamen, vorzugsweise am Stellantrieb (13) angeordneten Positionssensor (20) überwacht werden und
**dass** der Positionssensor (20) eine Fehlermeldung auslöst, wenn die Position des Stellantriebes (13) über den von den Anschlägen (A1, A2) der Stellelemente (11, 12) vorgegebenen Verstellbereich (Vst) hinausgeht.

2. Verstelleinrichtung nach Anspruch 1, **dadurch gekennzeichnet, dass** der Verstellweg der Stellelemente (11, 12) durch zwei Anschläge (A1, A2) vorzugsweise mechanisch begrenzt ist, wobei der eine Anschlag (A1) am ersten Stellelement (11) und der andere Anschlag (A2) am zweiten Stellelement (12) angeordnet ist.

3. Verstelleinrichtung nach einem der Ansprüche 1 oder 2, **dadurch gekennzeichnet, dass** der Verstellbereich (Van) des Stellantriebes (13) ebenfalls durch je einen Anschlag (Ao, Au) vorzugsweise mechanisch begrenzt ist.

4. Verstelleinrichtung nach Anspruch 3, **dadurch gekennzeichnet, dass** der Positionssensor (20) des gemeinsamen Stellantriebs (13) nur dann eine Fehlermeldung auslöst, wenn der Stellantrieb eine durch die Anschläge (A1, A2) der Stellelemente (11, 12) vorgegebene Position des Verstellbereiches (Vst) über- beziehungsweise unterschreitet.

5. Verstelleinrichtung nach einem der vorherigen Ansprüche, **dadurch gekennzeichnet, dass** die beiden Stellelemente (11, 12) über je ein Verbindungsmittel, vorzugsweise Gestänge (17, 18) mit dem Stellantrieb (13) mechanisch verbunden sind.

6. Verstelleinrichtung nach Anspruch 5, **dadurch gekennzeichnet, dass** die beiden Gestänge 17, 18 der Stellelemente (11, 12) über ein Zentralgestänge (19) mit dem Stellantrieb (13) verbunden sind.

7. Verstelleinrichtung nach Anspruch 5 oder 6, **dadurch gekennzeichnet, dass** beim Über- oder Unterschreiten einer durch die Anschläge (A1, A2) der Stellelemente (11, 12) vorgegebene Position das Sensorsignal (Ss) eine Fehlermeldung für das Gestänge (17 oder 18) des betroffenen Stellelementes (11 oder 12) auslöst.

8. Verstelleinrichtung nach Anspruch 6 oder 7, **dadurch gekennzeichnet, dass** beim Überschreiten der beiden durch die Anschläge (A1, A2) beider Stellelemente (11, 12) vorgegebenen Positionen das Sensorsignal (Ss) eine Fehlermeldung für das Zentralgestänge (19) auslöst.

9. Verstelleinrichtung nach einem der vorherigen Ansprüche, **dadurch gekennzeichnet, dass** der Positionssensor (20) eine Fehlermeldung für den Stellantrieb (13) auslöst, wenn das Sensorsignal (Ss) über den von Anschlägen (Ao,Au) des Stellantriebes (13) begrenzten Verstellbereich (Van) hinausgeht.

10. Verstelleinrichtung nach einem der vorherigen Ansprüche, **dadurch gekennzeichnet, dass** der Positionssensor (20) eine Fehlermeldung für einen elektrischen Fehler auslöst, wenn das Sensorsignal (Ss) eine außerhalb des Verstellbereich (Van) des Stellantriebes (13) liegende obere oder untere Diagnoseschwelle (El max, El min) über- bzw. unterschreitet.

11. Verstelleinrichtung nach einem der vorherigen Ansprüche, **dadurch gekennzeichnet, dass** die beiden Stellelemente (11, 12) jeweils als Ladungsbewegungsklappe in einem Saugrohr für V-Motoren ausgebildet sind.
